# EUROPÄISCHE PATENTSCHRIFT

(11) **EP 3 075 479 B1**
(45) Veröffentlichungstag und Bekanntmachung des Hinweises auf die Patenterteilung: **19.01.2022**
(21) Anmeldenummer: 16000714.2
(22) Anmeldetag: 24.03.2016
(51) Int. Cl.: B23D 47/08, B23D 45/06

(54) **SÄGEAGGREGAT ZUM SÄGEN VON WERKSTÜCKEN AUS HOLZ, KUNSTSTOFF UND DERGLEICHEN**
SAW UNIT FOR SAWING WORKPIECES MADE OF WOOD, PLASTIC AND THE LIKE
AGREGAT DE SCIE POUR PIECES USINEES EN BOIS, EN MATIERE SYNTHETIQUE ET ANALOGUE

(30) Priorität: 01.04.2015 DE 202015002508 U
(43) Veröffentlichungstag der Anmeldung: 05.10.2016
(73) Patentinhaber: Weinig Dimter GmbH & Co. KG, 89257 Illertissen (DE)
(72) Erfinder: HEINZ, Alois, 89299 Unetrroth (DE); REINBOLD, Goerg, 88400 Biberach (DE); Schmid, Thomas, 89129 Langenau (DE); Locherer, Herbert, 88471 Laupheim (DE)
(74) Vertreter: Kohl, Karl-Heinz

(56) Entgegenhaltungen:
- EP-A1- 1 815 930
- WO-A1-2012/065609
- DE-A1- 4 004 705
- US-A- 2 299 262
- US-A- 2 505 958
- US-A- 4 336 733
- US-A- 4 365 530
- US-A- 5 875 698
- US-A1- 2006 288 836
- US-A1- 2011 048 191

## Beschreibung

Die Erfindung betrifft ein Sägeaggregat zum Sägen von Werkstücken aus Holz, Kunststoff und dergleichen nach dem Oberbegriff des Anspruches 1. Ein solches Sägeaggregat, gemäß dem Oberbegriff des Anspruchs 1, ist offenbart in WO2012/065609.

Es sind Sägeaggregate bekannt, mit denen längliche Werkstücke aus Holz gesägt werden, um sie entweder auf bestimmte Länge zu bringen oder um Fehler und/oder schlechte Holzqualitäten aus den Werkstücken zu entfernen. Solange Werkstücke mit gleichem Querschnitt dem Sägeaggregat zugeführt werden, können die Werkstücke innerhalb kurzer Zeit gesägt werden. Häufig kommt es jedoch vor, dass Werkstücke mit wechselnden Querschnitten dem Sägeaggregat nacheinander zugeführt werden. Dann wird zum Sägen der unterschiedlich breiten und/oder dicken Werkstücke stets der gleiche Sägeblatthub eingesetzt, wodurch keine hohe Durchsatzleistung des Sägeaggregates erreicht wird.

Beim gattungsgemäßen Sägeaggregat (EP 1 815 930 A1) lässt sich das Sägeblatt mit einer doppelten Kraftübertragungsschwinge in Höhenrichtung verstellen. Eine untere Schwinge ist um die Achse des Antriebsmotors schwenkbar, während die obere Schwinge gelenkig mit einem das Kreissägeblatt tragenden Schlitten verbunden ist, der in Höhenrichtung längs einer Führung verschiebbar ist.

Auch bei anderen bekannten Sägeaggregaten wird ein das Kreissägeblatt aufweisender Träger längs Führungen verstellt (US 2011/0048191 A1, US 2006/0288836 A1, DE 40 04 705 A1, US 5 875 698 A).

Der Erfindung liegt die Aufgabe zugrunde, das gattungsgemäße Sägeaggregat so auszubilden, dass mit ihm ein hoher Durchsatz an zu sägenden Werkstücken erreicht werden kann.

Diese Aufgabe wird beim gattungsgemäßen Sägeaggregat erfindungsgemäß mit den kennzeichnenden Merkmalen des Anspruches 1 gelöst.

Das erfindungsgemäße Sägeaggregat zeichnet sich dadurch aus, dass die Bereitstellungsposition des Kreissägeblattes in Abhängigkeit von der Position eines verstellbaren Gestellteiles so gewählt wird, dass das Kreissägeblatt einen geringsten Winkelweg als Arbeitsweg beim Sägeprozess ausführt. Die Werkstücke können dadurch in kurzer Zeit gesägt werden, weil die Bereitstellungsposition des Kreissägeblattes in Abhängigkeit von der Querschnittsform des Werkstückes stets optimal eingestellt wird.

Die Drehachse des Kreissägeblattes ist exzentrisch in einem Rotor drehbar gelagert, der ebenfalls am verstellbaren Gestellteil vorgesehen ist und dessen Drehachse parallel zur Drehachse des Kreissägeblattes liegt. Dadurch besteht die Möglichkeit, die Ausgangslage des Kreissägeblattes in der Bereitstellungsposition genau auf den Querschnitt des zu sägenden Werkstückes einzustellen. Dadurch kann in Verbindung mit der Verstellung des Gestellteiles die Sägezeit für das jeweilige Werkstück optimiert werden. Durch Drehen des Rotors wird die Drehachse des Kreissägeblattes um die Drehachse des Rotors umlaufend bewegt. Diese Umlaufbewegung der Drehachse des Kreissägeblattes ergibt den zum Durchsägen des Werkstückes erforderlichen Sägehub. Durch die Kreisbewegung des Rotors bleiben die wirksamen Hebel und Drehmomente in jeder Kreisposition annähernd gleich, was sich vorteilhaft auf die Betriebsweise des Kreissägeblattes auswirkt. Bei einer konstruktiv einfachen Ausbildung ist der Rotor mit einem Hohlrad versehen, über das wenigstens ein Endlosriemen geführt ist.

Das erfindungsgemäße Sägeaggregat hat den Gestellteil, der in vertikaler und/oder horizontaler Richtung quer zur Drehachse des Kreissägeblattes in Abhängigkeit vom Querschnitt des zu sägenden Werkstückes verstellt werden kann. Am Gestellteil befindet sich der Antrieb für das Kreissägeblatt, das durch die Verstellung des Gestellteiles entsprechend verstellt wird. Dadurch ist es möglich, den Hubweg und damit auch die Sägezeit in Abhängigkeit vom Querschnitt des zu sägenden Werkstückes einzustellen. Dadurch können die Werkstücke innerhalb kurzer Zeit optimal gesägt werden. Das erfindungsgemäße Sägeaggregat zeichnet sich darum durch einen hohen Durchsatz und nur geringe Sägezeiten aus.

Je nach Querschnittsform des Werkstückes wird die Drehachse des Kreissägeblattes relativ zur Drehachse des Rotors in der Bereitstellungsposition so eingestellt, dass das Werkstück bei minimalem Sägehub und damit in kurzer Zeit gesägt werden kann.

Erfindungsgemäß befindet sich das Kreissägeblatt in der Bereitstellungsposition im Bereich unterhalb einer Transportbahn für das Werkstück. Es besteht darum die Möglichkeit, dass das Werkstück auf der Transportbahn über das Kreissägeblatt hinweg bewegt wird, ohne dass das Werkstück gesägt wird.

Durch die Drehbewegung des Rotors wird der zum Durchsägen des Werkstückes erforderliche Hub des Kreissägeblattes erzeugt, das während der Hubbewegung ständig drehbar angetrieben wird. Infolge der Drehbewegung des Rotors tritt das Kreissägeblatt nur über einen bestimmten Winkelbereich des Bewegungsweges der Drehachse des Kreissägeblattes um die Drehachse des Rotors über die Transportbahn des Werkstückes hinaus, wobei dann der Sägeschnitt durchgeführt wird. Sobald das Kreissägeblatt wieder unter die Transportbahn abtaucht, kann das Werkstück bereits weitertransportiert werden, während das Kreissägeblatt durch Weiterdrehen des Rotors in die Bereitstellungsposition zurückgeführt wird. Dies führt zu einer erheblichen Zeitersparnis, wenn nacheinander unterschiedliche Werkstücke gesägt werden sollen.

Bei einem maximalen Querschnitt des zu sägenden Werkstückes ist es möglich, durch Drehen des Rotors die Drehachse des Kreissägeblattes um einen großen Winkelbereich um die Rotordrehachse umlaufen zu lassen. Der Winkelbereich kann in einem solchen Fall größer als 300° sein.

Je dünner das zu sägende Werkstück ist, desto kleiner ist der Sägehub, den das Kreissägeblatt ausführen muss. Es kann in der Bereitstellungsposition so eingestellt werden, dass die Drehachse des Kreissägeblattes einen entsprechend geringen Abstand von der Transportbahn des Werkstückes hat.

Je nach Querschnitt (Dicke und/oder Breite) des Werkstückes wird die Drehachse des Kreissägeblattes in der Bereitstellungsposition relativ zur Transportrichtung bzw. zur Drehachse des Rotors eingestellt. Auf diese Weise lässt sich die Bereitstellungsposition des Kreissägeblattes optimal so einstellen, dass das Werkstück innerhalb kurzer Zeit gesägt wird.

Bei einer vorteilhaften Ausführungsform ist das Kreissägeblatt über wenigstens einen Riementrieb antreibbar. Er stellt eine konstruktiv einfache und kostengünstige Möglichkeit dar, das Kreissägeblatt von einem entsprechenden Antriebsmotor aus drehbar anzutreiben.

Selbstverständlich kann anstelle eines Riementriebes auch jeder andere geeignete Drehantrieb für das Kreissägeblatt vorgesehen werden, beispielsweise ein Zahnradgetriebe.

Vorteilhaft wird auch der Rotor mit wenigstens einem Riemenantrieb angetrieben. Auch für den Rotor kann jeder andere geeignete Drehantrieb herangezogen werden, beispielsweise ein Zahnradgetriebe.

Die Antriebe für das Kreissägeblatt und den Rotor sind vorteilhaft an eine Steuerung angeschlossen. Mit ihr ist es möglich, die entsprechenden Antriebe in der gewünschten Weise anzusteuern, um die Hubbewegung des Sägeblattes durch Drehen des Rotors zu erzeugen oder beispielsweise um das Kreissägeblatt in eine bestimmte Bereitstellungsposition zu verstellen.

Der Riementrieb für das Kreissägeblatt befindet sich vorteilhaft im Bereich außerhalb des Hohlrades.

Um eine Minimierung möglicher Ausrisse am Werkstück durch den Sägevorgang zu erreichen, ist es von Vorteil, wenn die Drehgeschwindigkeit des Rotors regelbar ist.

Bei einer bevorzugten Ausführungsform sind die Drehachse des Kreissägeblattes und eine Welle des Riementriebes für das Kreissägeblatt durch wenigstens eine längenveränderliche Koppeleinheit miteinander verbunden. Eine Grobeinstellung des Kreissägeblattes in die Bereitstellungsposition ist erfindungsgemäß weil der Gestellteil um eine zur Drehachse des Kreissägeblattes parallele Achse schwenkbar ist.

Die Erfindung wird anhand eines in den Zeichnungen dargestellten Ausführungsbeispiels näher erläutert. Es zeigen:

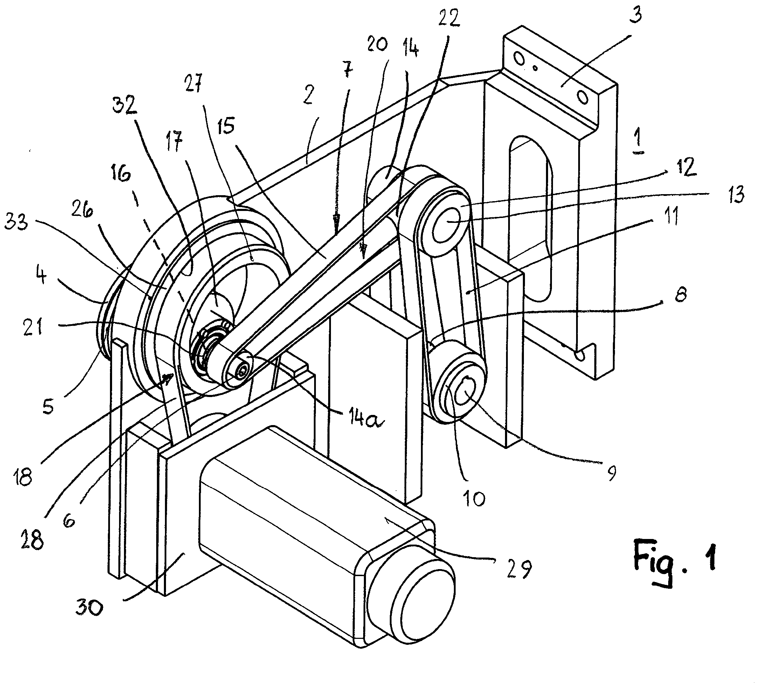

- Fig. 1: in perspektivischer Darstellung ein erfindungsgemäßes Sägeaggregat,
- Fig. 2: in schematischer Darstellung den Bewegungsablauf von Sägeblatt und Rotor des Sägeaggregates beim Sägen und beim Einstellen des Sägehubes,
- Fig. 3: bis
- Fig. 6: verschiedene Bereitstellungspositionen des Sägeblattes bei Werkstücken mit unterschiedlicher Querschnittsform.

Mit dem Sägeaggregat werden Werkstücke aus Holz, Kunststoff oder dergleichen gesägt. Insbesondere werden längliche Werkstücke aus Holz in kleinere Holzwerkstücke gesägt. Es ist hierbei möglich, die Werkstücke in gleich große Werkstückteile zu zersägen. Das Sägeaggregat kann aber auch dazu herangezogen werden, aus Werkstücken Fehler und/oder schlechte Qualitäten herauszusägen. Hierzu werden die Holzwerkstücke zunächst vermessen und die auszuschneidenden Fehler markiert. Dies kann manuell, aber auch beispielsweise mittels Scannern automatisch durchgeführt werden. Die auszuschneidenden Fehler, zum Beispiel Äste oder schlechte Holzqualitäten, werden in einer Schnittliste zusammengestellt und von der Messstation einer Steuerung übermittelt, die das Sägeaggregat so steuert, dass das Holzwerkstück an der geforderten Stelle angehalten wird, um den Fehler und/oder die schlechte Holzqualität herauszusägen.

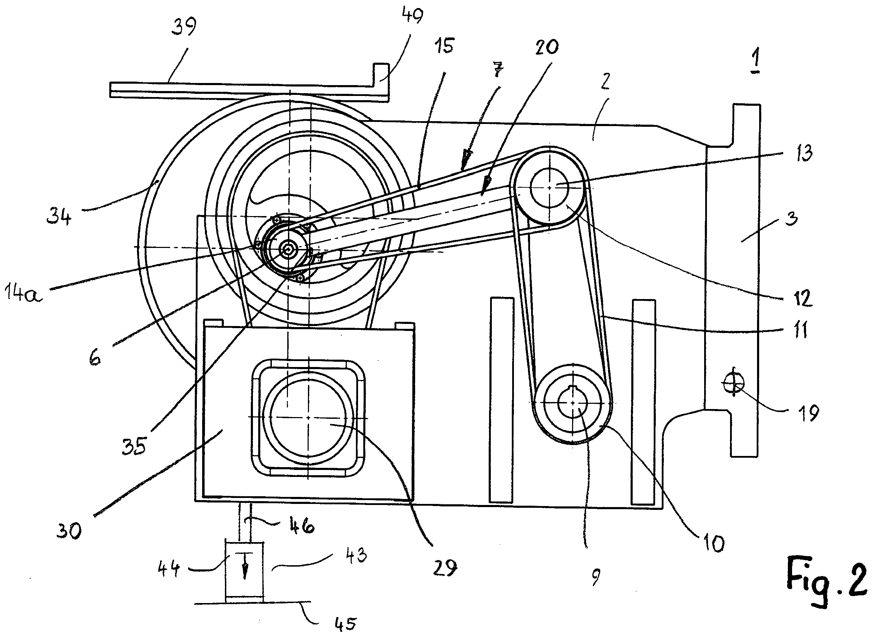

Das Sägeblatt 34 (Fig. 2), das vorteilhaft ein Kreissägeblatt ist, befindet sich zunächst in einer Ruhe- bzw. Bereitstellungsposition, wenn kein Sägeschnitt ausgeführt werden soll. Soll ein Sägeschnitt am Werkstück durchgeführt werden, wird das Sägeblatt 34 aus der Bereitstellungsposition herausbewegt und hierbei der Sägeschnitt durchgeführt. Damit das Sägeaggregat eine hohe Leistung aufweist, wird die Verstellung des Sägeblattes 34 in die Bereitstellungsposition auf den Querschnitt des zu zersägenden Werkstückes 47 abgestimmt. Dadurch sind nur geringe Hubwege des Sägeblattes erforderlich, um den Sägeschnitt durchzuführen.

Das Sägeaggregat hat ein Gestell 1, das zwei plattenförmige Gestellteile 2, 3 aufweist, die beispielhaft rechtwinklig zueinander angeordnet sind. Das Kreissägeblatt 34 wird beispielhaft zwischen zwei kreisförmigen Klemmscheiben 4, 5 eingespannt, die auf einer Welle 6 drehfest sitzen. Das Sägeblatt bzw. die Klemmscheiben 4, 5 werden durch eine Dreheinheit 7 drehbar angetrieben. Sie hat einen am Gestellteil 2 befestigten Antriebsmotor 8, der vorzugsweise ein AC-Motor ist. Auf seiner Antriebswelle 9 sitzt drehfest ein Riemenrad 10. Es ist über wenigstens einen Endlosriemen 11 mit einem Riemenrad 12 verbunden, das drehfest auf einer parallel zur Antriebswelle 9 liegenden Welle 13 sitzt. Neben dem Riemenrad 12 sitzt auf der Welle 13 drehfest ein weiteres Riemenrad 14, das über wenigstens einen Endlosriemen 15 mit einem Riemenrad 14a antriebsverbunden ist. Es sitzt auf einer parallel zur Welle 13 liegenden Welle 16, die drehbar in einem Rotor 17 gelagert ist. Er ist Teil einer Hubeinheit 18, mit der der Sägeblatthub eingestellt werden kann. Die beiden Riementriebe 10 bis 12, 14, 15, 14a erstrecken sich quer zueinander, vorzugsweise etwa rechtwinklig zueinander.

Der Gestellteil 2 ist um eine Achse 19 schwenkbar mit dem Gestellteil 3 verbunden. Die Schwenkachse 19 liegt parallel zur Antriebswelle 9. An ihrem vom Gestellteil 3 abgewandten Endbereich greift eine Hubeinheit 43 an (Fig. 2). Sie hat wenigstens ein Hubgetriebe 44, das auf einem Untergrund 45 abgestützt ist. Durch Ein- und Ausfahren einer gelenkig mit dem Gestellteil 2 verbundenen Hubeinheit 46 kann der Gestellteil 2 um die Achse 19 gegenüber dem Gestellteil 3 geschwenkt werden.

Die Welle 16, auf der das Riemenrad 14a des Endlosriemens 15 sitzt, ist exzentrisch am Rotor 17 gelagert. Wenn darum der Rotor 17 um seine Achse 35 (Fig. 2) drehbar angetrieben wird, bewegt sich die Welle 6 in einem Kreisbogen um die Drehachse des Rotors 17.

Damit das Sägeblatt zuverlässig drehbar angetrieben wird, sind die Riemenräder 10, 12, 14, 14a vorteilhaft Zahnriemenräder, über welche die als Zahnriemen ausgebildeten Endlosriemen 11, 15 geführt sind.

Die Riemenräder 10, 12 haben vorteilhaft gleichen Durchmesser. Das Riemenrad 14a hat vorteilhaft kleineren Durchmesser als das Riemenrad 14, so dass der Riementrieb 14, 15, 14a eine Übersetzungsstufe bildet.

Die beiden Wellen 6, 13 sind über eine Koppeleinheit 20 miteinander verbunden. Sie ist längenverstellbar, so dass sie auf den Abstand zwischen den beiden Wellen 6, 13 genau eingestellt werden kann. Die Koppeleinheit 20 ist an einem Ende mit einem Lager 21 versehen, in dem die Welle 6 drehbar gelagert ist. Das andere Ende der Koppeleinheit 20 ist mit einem Lagerauge 22 versehen, durch das sich die Welle 13 erstreckt. Im Bereich zwischen dem Lager 21 und dem Lagerauge 22 befindet sich ein (nicht dargestelltes) Verstellelement, das beispielsweise eine Gewindehülse ist, in die eine Gewindestange eingreift, die vom Lager 21 absteht. Durch Drehen der Gewindehülse kann die Länge der Koppeleinheit 20 stufenlos eingestellt werden. Die Koppeleinheit 20 sitzt axial gesichert auf der Welle 6 bzw. 13.

Der Rotor 17 ist in einer Aufnahme 26 drehbar gelagert, die am Gestellteil 2 vorgesehen ist. Der Rotor 17 hat ein Hohlrad 27, das als Riemenrad dient, über welches wenigstens ein Endlosriemen 28 verläuft. Er ist vorteilhaft ein Zahnriemen, der einen schlupffreien Antrieb des Rotors 17 gewährleistet. Das Hohlrad 27 sitzt auf der Drehachse 35 des Rotors 17.

Zum Antrieb des Hohlrades 27 dient ein Antriebsmotor 29, der quer von einem Flansch 30 absteht, der in geeigneter Weise am Gestell 1 bzw. am Gestellteil 2 befestigt ist. Der Flansch 30 liegt mit Abstand zum Gestellteil 2. In dem dadurch gebildeten Zwischenraum verläuft der Endlosriemen 28. Der Flansch 30 ist vorteilhaft als rechteckige Platte ausgebildet. Auf der Antriebswelle des Antriebsmotors 29 sitzt ein (nicht dargestelltes) Riemenrad, über das der Endlosriemen 28 geführt ist. Das Riemenrad des Antriebsmotors 29, der Endlosriemen 28 und das Hohlrad 27 bilden eine Untersetzungsstufe.

Die Welle 6 ist so lang, dass das Riemenrad 16 sowie das Lager 21 im Bereich axial neben dem Hohlrad 27 liegen. Es ist in einer Aufnahmeöffnung 32 der Aufnahme 26 drehbar gelagert. Zur Axialsicherung des Hohlrades 27 dient ein Sicherungsring 33, der beispielsweise an die Stirnseite der Aufnahme 26 angeschraubt ist und als Anschlag für einen innerhalb der Aufnahme 26 liegenden Radialflansch des Hohlrades 27 dient.

Bei der Sägeoperation wird das Sägeblatt vorteilhaft kontinuierlich angetrieben. Auch bei der Hubverstellung des Sägeblattes wird der Drehantrieb nicht unterbrochen. Wenn die zu sägenden Werkstücke 47 in den Bereich des Sägeaggregates transportiert werden, nimmt das Sägeblatt 34 zunächst seine Bereitstellungsposition ein. Im Ausführungsbeispiel befindet sich das Sägeblatt 34 dann im Bereich unterhalb des Transportweges 39 des zu sägenden Werkstückes 47. Der Transport des Werkstückes erfolgt in Richtung der Welle 6. Während des Transports liegt das Werkstück 47 mit seiner einen in Transportrichtung verlaufenden Längsseite 48 an einem Anschlaglineal 49 an. Mit dem Kreissägeblatt 34 wird das Werkstück 47 senkrecht zur Transportrichtung gesägt.

Zum Sägen des Werkstückes 47 wird der Antriebsmotor 29 eingeschaltet, wodurch der Rotor 17 um seine Achse drehbar angetrieben wird. Da die Welle 6 exzentrisch am Rotor 17 gelagert ist, wird das Sägeblatt 34 beim Drehen des Rotors 17 längs eines Kreisbogens um die Drehachse 35 des Rotors 17 bewegt.

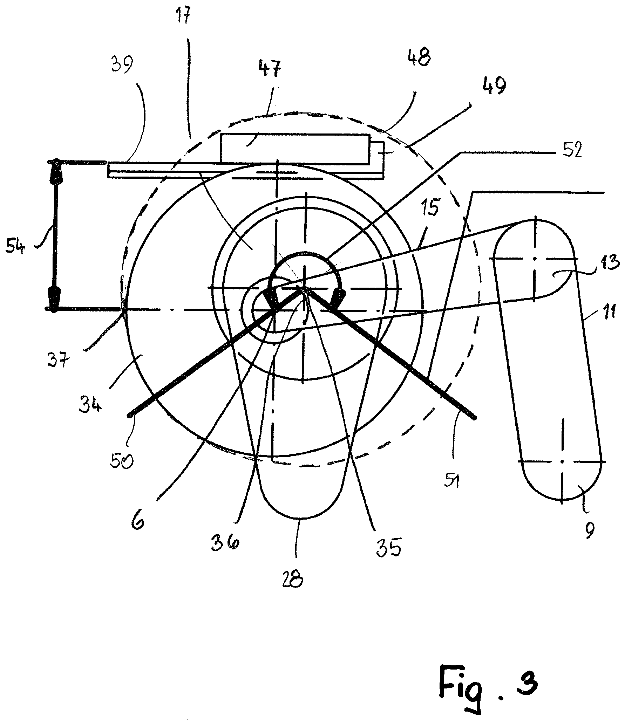

Die Achse der Welle 6 und die Drehachse 35 des Rotors 17 sind um das Exzentermaß 36 versetzt zueinander angeordnet. In Fig. 3 ist mit gestrichelten Linien der Flugkreis 38 dargestellt, den ein am Umfang des Kreissägeblattes 34 liegender Punkt 37 bei der Rotation des Rotors 17 um seine Achse 35 zurücklegt. Die Exzentrizität 36 ist so vorgesehen, dass das Werkstück 47 vollständig durchsägt wird, wobei der Hub des Kreissägeblattes 34 minimal ist. Mit der Linie 50 ist die Bereitstellungsposition des Kreissägeblattes 34 gekennzeichnet, in der das Kreissägeblatt 34 das Werkstück 47 an der Unterseite gerade berührt oder nur noch minimalen Abstand vom Werkstück 47 hat. Die Linie 50 verläuft durch die Drehachse 35 des Rotors 17 sowie die Drehachse 6 des Kreissägeblattes 34.

Mit der anderen Geraden 51 ist die Abtauchposition des Sägeblattes 34 gekennzeichnet, wenn das Kreissägeblatt das Werkstück 47 gerade verlässt.

Der Bewegungsweg 52 der Drehachse 6 des Kreissägeblattes 34 um die Drehachse 35 des Rotors 17 beträgt beim dargestellten Ausführungsbeispiel etwa 260°.

Da die Drehachse 6 des um diese Achse drehenden Kreissägeblattes 34 während des Sägevorganges eine Umlaufbewegung um die Drehachse 35 des Rotors 17 ausführt, bleiben die wirksamen Hebelarme und Drehmomente in jeder Kreiswinkelposition des Sägeblattes 34 annähernd gleich, wodurch sich ein optimaler Sägeschnitt ergibt.

Bei der Stellung gemäß Fig. 3 befindet sich die Drehachse 6 des Kreissägeblattes 34 bezüglich der Drehachse 35 des Rotors 17 in einer solchen Lage, dass die Gerade 50 eine 7-Uhr-Stellung einnimmt. Sie wird durch die Dicke und die Breite des zu sägenden Werkstückes 47 bestimmt. Der Abstand 54 zwischen der Drehachse 6 des Kreissägeblattes 34 und der Transportbahn 39 ist auf die Dicke und die Breite des Werkstückes 47 abgestimmt.

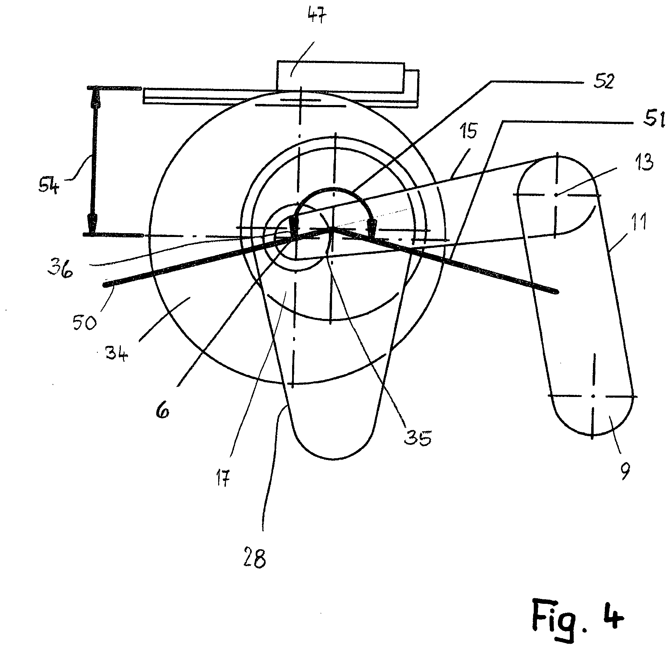

Fig. 4 zeigt beispielhaft den Fall, dass das zu sägende Werkstück 47 die gleiche Dicke wie das Werkstück gemäß Fig. 3 hat, jedoch schmaler als dieses Werkstück ist. Aus diesem Grunde wird die Drehachse 6 des Kreissägeblattes 34 in Bezug auf die Drehachse 35 des Rotors 17 so eingestellt, dass der Abstand 54 kleiner ist als bei der Stellung gemäß Fig. 3. Um diesen Abstand einzustellen, wird der Rotor 17 so weit um seine Achse 35 gedreht, bis die Drehachse 6 des Kreissägeblattes 34 den erforderlichen Abstand 54 zur Transportbahn 39 aufweist. In der Bereitstellungsposition (Gerade 50) liegt das Kreissägeblatt 34 an der Unterseite des Werkstückes 47 an bzw. hat nur noch geringen Abstand von ihr. Das Kreissägeblatt 34 wird mittels der beschriebenen Riementriebe 10 bis 12 und 14, 14a, 15 um seine Achse 6 drehbar angetrieben. Der Rotor 17 wird zum Durchsägen des Werkstückes 47 mittels des Antriebsmotors 29 über den Riemen 28 und das Hohlrad 27 drehbar angetrieben. Wie anhand von Fig. 3 beschrieben worden ist, wird durch Drehen des Rotors 17 die Drehachse 6 des Kreissägeblattes 34 um die Rotordrehachse 35 bewegt, die damit den Bewegungsweg 52 zurücklegt. Er ist geringer als beim Durchsägen des Werkstückes 47 gemäß Fig. 3. Der Bewegungsweg 52 beträgt etwa 210°. Die die Bereitstellungsposition kennzeichnende Gerade 50 nimmt eine 8-Uhr-Stellung ein. Aus ihr heraus erfolgt der Sägevorgang. Nach einem Umlauf der Drehachse 6 des Kreissägeblattes 34 um die Drehachse 35 des Rotors 17 um den Bewegungsweg 52 taucht das Kreissägeblatt 94 nach unten aus dem Werkstück 47 ab. Diese Abtauchposition ist wiederum durch die Gerade 51 gekennzeichnet.

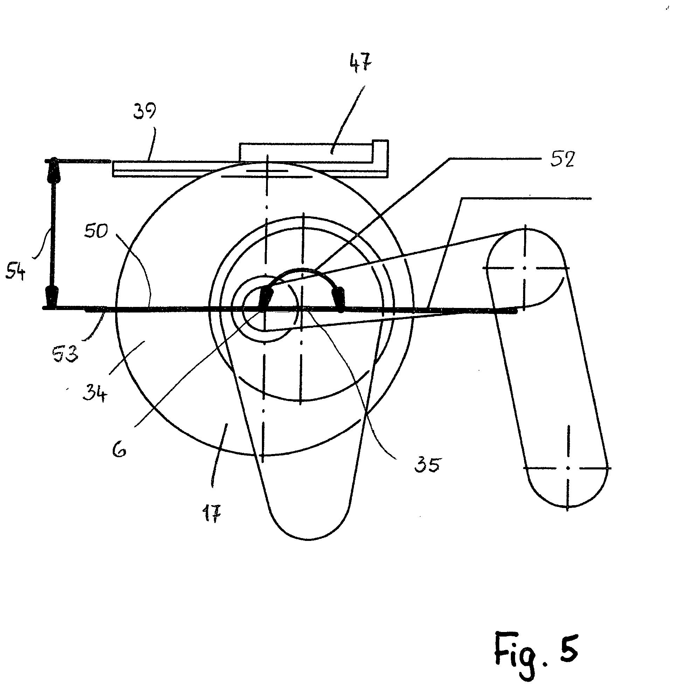

Beim Ausführungsbeispiel nach Fig. 5 wird ein dünnes Werkstück 47 durchsägt, das wesentlich dünner ist als die Werkstücke gemäß den Fig. 3 und 4. Darum ist der Sägehub geringer als bei den vorigen Ausführungsbeispielen, um das Werkstück 47 zu durchtrennen. Die Drehachse 6 des Kreissägeblattes 34 wird in Bezug auf die Drehachse 35 des Rotors 17 so eingestellt, dass der Abstand 54 der Drehachse 6 von der Transportbahn 39 entsprechend geringer ist. Im Ausführungsbeispiel liegen beide Drehachsen 6, 35 beispielhaft in einer parallel zur Transportbahn 39 verlaufenden Ebene 53. Das Kreissägeblatt 34 liegt in der Bereitstellungsposition wiederum an der Unterseite des zu sägenden Werkstückes 47 an bzw. hat nur minimalen Abstand von ihr. Die die Bereitstellungsposition kennzeichnende Gerade 50 nimmt in diesem Fall eine 9-Uhr-Stellung ein.

Durch Drehen des Rotors 17 um seine Achse 35 wird die Drehachse 6 des rotierenden Kreissägeblattes 34 längs des Bewegungsweges 52 um die Drehachse 35 bewegt. Da das Werkstück 47 dünn ist, ist nur ein entsprechend geringer Hub senkrecht zur Transportbahn 39 des Kreissägeblattes 34 erforderlich. Nach einer Bewegung um 180° tritt das Kreissägeblatt 34 wieder aus dem Werkstück 47 aus.

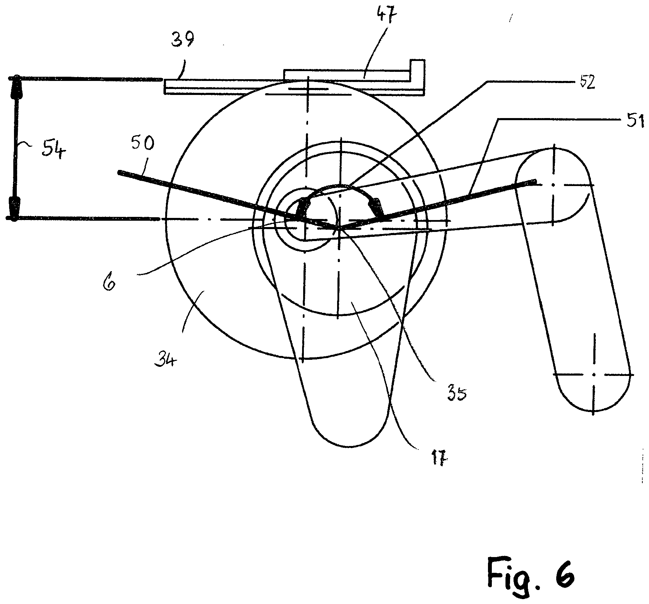

Anhand von Fig. 6 wird der Fall beschrieben, dass mit dem Kreissägeblatt 34 ein noch dünneres Werkstück 47 durchgesägt werden soll. In diesem Falle wird die Drehachse 6 des Kreissägeblattes 34 so eingestellt, dass ihr Abstand 54 von der Transportbahn 39 in der Bereitstellungsposition geringer ist als bei den Ausführungsformen gemäß den Fig. 3 bis 5. Die Bereitstellungsposition des Kreissägeblattes 34 ist wiederum durch die Gerade 50 gekennzeichnet, die bei diesem Ausführungsbeispiel eine 10-Uhr-Stellung einnimmt. Der Hub, den das Kreissägeblatt 34 während des Durchsägens des Werkstückes 47 ausführen muss, ist bei diesem Ausführungsbeispiel im Vergleich zu den Ausführungsbeispielen gemäß den Fig. 3 bis 5 am geringsten. Der Bewegungsweg 52 der Drehachse 6 um die Drehachse 35 des Rotors 17 beträgt nur noch etwa 150°, bevor das Kreissägeblatt 34 aus dem Werkstück 47 austritt (Linie 51).

Die beschriebenen Ausführungsbeispiele zeigen, dass die Werkstücke 47 abhängig von ihrer Dicke und/oder Breite sehr effektiv mit dem Kreissägeblatt 34 durchsägt werden können. Das Kreissägeblatt 34 wird jeweils so eingestellt, dass der Hub des Kreissägeblattes 34 beim Sägevorgang minimal ist, so dass die Werkstücke 47 innerhalb kürzester Zeit durchsägt werden können.

Nach dem Durchsägen des Werkstückes 47 wird das Kreissägeblatt 34 wieder in die Grundstellung zurückgedreht, während das nächste Werkstück 47 zugeführt wird. Dadurch steht das Kreissägeblatt 34 sofort für den nächsten Sägeschnitt zur Verfügung, wenn er am Werkstück 47 oder einem nachfolgenden Werkstück durchzuführen ist.

Die Verstellung des Sägeblattes 34 in unterschiedliche Grundstellungen in Abhängigkeit von der Breite und/oder Dicke des zu sägenden Werkstückes 47 wird automatisch durch eine Steuerung vorgenommen, der die Maße der Werkstücke bei einer vorgehenden Messung übermittelt werden. Die Werkstücke 47 werden in bekannter Weise bei ihrem Transport zum Sägeaggregat vermessen und auf Fehler überprüft. Sie werden in einer so genannten Schnittliste festgehalten, die der Steuerung übermittelt wird. Anhand der Angaben in der Steuerung wird der Sägevorgang an den erforderlichen Stellen des Werkstückes 47 vorgenommen. Die Steuerung treibt die Antriebsmotoren 8, 29 für den Rotor 17 sowie das Sägeblatt 34. Dadurch wird das Sägeblatt 34 optimal so eingestellt, dass die Sägezeiten minimiert sind.

Es besteht die Möglichkeit, die Drehung des Rotors 17 nicht kontinuierlich, sondern geregelt durchzuführen. Dadurch wird die Gefahr verringert, dass Ausrisse am zu sägenden Werkstück 47 entstehen.

Anstelle der Riementriebe für den Rotor 17 und das Kreissägeblatt 34 können beispielsweise auch Zahnradgetriebe eingesetzt werden.

## Patentansprüche

1. Sägeaggregat zum Sägen von Werkstücken (47) aus Holz, Kunststoff und dergleichen, mit wenigstens einem Kreissägeblatt (34), das durch einen Antriebsmotor (8) drehbar antreibbar und aus einer Bereitstellungsposition, in der sich das Kreissägeblatt (34) unterhalb einer Transportbahn (39) des zu sägenden Werkstückes (47) befindet, in eine Arbeitsstellung verstellbar ist, mit einem Rotor (17), in dem eine Drehachse (6) des Kreissägeblattes (34) exzentrisch gelagert ist und dessen Drehachse (35) parallel zur Drehachse (6) des Kreissägeblattes (34) liegt, und mit einem Gestellteil (2), an dem der Rotor (17), ein weiterer Antriebsmotor (29) für den Rotor (17), das Kreissägeblatt (34) und der Antriebsmotor (8) für das Kreissägeblatt (34) gelagert sind, **dadurch gekennzeichnet, dass** der Gestellteil (2) quer zur Drehachse (6) des Kreissägeblattes (34) in vertikaler und/oder horizontaler Richtung in Abhängigkeit vom Querschnitt des zu sägenden Werkstückes (47) verstellbar ist, indem das Gestellteil (2) um eine zur Drehachse (6) des Kreissägeblattes (34) parallele Achse (19) schwenkbar ist.

2. Sägeaggregat nach Anspruch 1,
**dadurch gekennzeichnet, dass** die Lage des Kreissägeblattes (34) in der Bereitstellungsposition relativ im Rotor (17) einstellbar ist.

3. Sägeaggregat nach Anspruch 1 oder 2,
**dadurch gekennzeichnet, dass** das Kreissägeblatt (34) über wenigstens einen Riementrieb (10 bis 12; 14, 15, 14a) antreibbar ist.

4. Sägeaggregat nach einem der Ansprüche 1 bis 3,
**dadurch gekennzeichnet, dass** der Rotor (17) mit wenigstens einem Riementrieb (27, 28) antreibbar ist.

5. Sägeaggregat nach einem der Ansprüche 1 bis 4,
**dadurch gekennzeichnet, dass** die Antriebe (8, 29) für das Kreissägeblatt (34) und den Rotor (17) an eine Steuerung angeschlossen sind.

6. Sägeaggregat nach einem der Ansprüche 1 bis 5,
**dadurch gekennzeichnet, dass** der Rotor (17) ein Hohlrad (27) aufweist, über das wenigstens ein Endlosriemen (28) geführt ist.

7. Sägeaggregat nach Anspruch 6,
**dadurch gekennzeichnet, dass** der Riementrieb (14, 15, 14a) für das Kreissägeblatt (34) im Bereich außerhalb des Hohlrades (27) angeordnet ist.

8. Sägeaggregat nach einem der Ansprüche 1 bis 7,
**dadurch gekennzeichnet, dass** die Drehgeschwindigkeit des Rotors (17) regelbar ist.

9. Sägeaggregat nach einem der Ansprüche 1 bis 8,
**dadurch gekennzeichnet, dass** die Drehachse (6) des Kreissägeblattes (34) und eine Welle (13) des Riementriebes (10 bis 12) für das Kreissägeblatt (34) durch wenigstens eine längenveränderliche Koppeleinheit (20) miteinander verbunden sind.

## Claims

1. A saw unit for sawing workpieces (47) made of wood, plastic and the like, comprising at least one circular saw blade (34) which can be driven rotatably by a drive motor (8) and is adjustable from a ready position in which the circular saw blade (34) is located under a transport path (39) of the workpiece (47) to be sawn into a working position, comprising a rotor (17) in which an axis of rotation (6) of the circular saw blade (34) is mounted eccentrically and whose axis of rotation (35) lies parallel to the axis of rotation (6) of the circular saw blade (34) and comprising a frame part (2) on which the rotor (17), a further drive motor (29) for the rotor (17), the circular saw blade (34) and the drive motor (8) for the circular saw blade (34) are mounted, **characterized in that** the frame part (2) is adjustable transversely to the axis of rotation (6) of the circular saw blade (34) in the vertical and/or horizontal direction depending on the cross-section of the workpiece (47) to be sawn, wherein the frame part (2) is pivotable about an axis (19) parallel to the axis of rotation (6) of the circular saw blade (34).

2. The saw unit according to Claim 1, **characterized in that** the position of the circular saw blade (34) in the ready position is relatively adjustable in the rotor (17).

3. The saw unit according to Claims 1 or 2, **characterized in that** the circular saw blade (34) can be driven via at least one belt drive (10 to 12; 14, 15, 14a) .

4. The saw unit according to one of Claims 1 to 3, **characterized in that** the rotor (17) can be driven with at least one belt drive (27, 28).

5. The saw unit according to one of Claims 1 to 4, **characterized in that** the drives (8, 29) for the circular saw blade (34) and the rotor (17) are connected to a controller.

6. The saw unit according to one of Claims 1 to 5, **characterized in that** the rotor (17) comprises a hollow wheel (27) via which at least one endless belt (28) is guided.

7. The saw unit according to Claim 6, **characterized in that** the belt drive (14, 15, 14a) for the circular saw blade (34) is arranged in the area outside the hollow wheel (27).

8. The saw unit according to one of Claims 1 to 7, **characterized in that** the rotational speed of the rotor (17) can be regulated.

9. The saw unit according to one of Claims 1 to 8, **characterized in that** the axis of rotation (6) of the circular saw blade (34) and a shaft (13) of the belt drive (10 to 12) for the circular saw blade (34) are connected to one another by at least one variable-length coupling unit (20).

## Revendications

1. Groupe de sciage, destiné à scier des pièces à usiner (47) en bois, en matière plastique et similaires, pourvu d'au moins une lame de scie circulaire (34), qui est susceptible d'être entraînée en rotation par un moteur d'entraînement (8) et qui est réglable d'une position de mise à disposition, dans laquelle la lame de scie circulaire (34) se trouve en-dessous d'une trajectoire de transport (39) de la pièce à usiner (47) qui doit être sciée dans une position de travail, pourvu d'un rotor (17), dans lequel un axe de rotation (6) de la lame de scie circulaire (34) est logé de manière excentrique et dont l'axe de rotation (35) se situe à la parallèle de l'axe de rotation (6) de la lame de scie circulaire (34), et pourvu d'un élément de bâti (2), sur lequel sont logés le rotor (17), un autre moteur d'entraînement (29) pour le rotor (17), la lame de scie circulaire (34) et le moteur d'entraînement (8) pour la lame de scie circulaire (34), **caractérisé en ce que** l'élément de bâti (2) est réglable à la transversale de l'axe de rotation (6) de la lame de scie circulaire (34), en direction verticale et/ou horizontale, en fonction de la section transversale de la pièce à usiner (47) qui doit être sciée, **en ce que** l'élément de bâti (2) est susceptible de pivoter autour d'un axe (19) parallèle à l'axe de rotation (6) de la lame de scie circulaire (34).

2. Groupe de sciage selon la revendication 1, **caractérisé en ce que** l'emplacement de la lame de scie circulaire (34) par rapport au rotor (17) dans la position de mise à disposition est réglable.

3. Groupe de sciage selon la revendication 1 ou 2, **caractérisé en ce que** la lame de scie circulaire (34) est susceptible d'être entraînée par l'intermédiaire d'au moins une transmission par courroie (10 à 12 ; 14, 15, 14a) .

4. Groupe de sciage selon l'une quelconque des revendications 1 à 3, **caractérisé en ce que** le rotor (17) est susceptible d'être entraîné par au moins une transmission par courroie (27, 28).

5. Groupe de sciage selon l'une quelconque des revendications 1 à 4, **caractérisé en ce que** les entraînements (8, 29) pour la lame de scie circulaire (34) et le rotor (17) sont connectés sur un système de commande.

6. Groupe de sciage selon l'une quelconque des revendications 1 à 5, **caractérisé en ce que** le rotor (17) comporte une couronne (27) par l'intermédiaire de laquelle est guidée la courroie sans fin (28).

7. Groupe de sciage selon la revendication 6, **caractérisé en ce que** la transmission par courroie (14, 15, 14a) pour la lame de scie circulaire (34) est placée dans la zone extérieure à la couronne (27).

8. Groupe de sciage selon l'une quelconque des revendications 1 à 7, **caractérisé en ce que** la vitesse de rotation du rotor (17) est ajustable.

9. Groupe de sciage selon l'une quelconque des revendications 1 à 8, **caractérisé en ce que** l'axe de rotation (6) de la lame de scie circulaire (34) et un arbre (13) de la transmission par courroie (10 à 12) pour la lame de scie circulaire (34) sont reliés l'un à l'autre par au moins une unité d'accouplement (20) à longueur variable.
